# EUROPEAN PATENT APPLICATION

(11) **EP 4 421 040 A1**
(43) Date of publication of application: **28.08.2024**
(21) Application number: 23158729.6
(22) Date of filing: 27.02.2023
(51) Int. Cl.: C01C 1/04, C01B 21/38

(54) **SYSTEM FOR INTEGRATED NITRIC ACID AND AMMONIA PRODUCTION AND METHOD OF PRODUCTION THEREOF**

(71) Applicant: Yara International ASA, 0277 Oslo (NO)
(72) Inventor: GILLES, David, 1160 Auderghem (BE); DE SMET, André, 4535 JH Terneuzen (NL)
(74) Representative: De Clercq & Partners

(57) **Abstract**

The present disclosure relates to the field of integrated nitric acid and ammonia production. The nitric acid tail gas is, following depletion in NOx to 100 ppm or less, combined with hydrogen at least partly produced from a water electrolyzer. The tail gas being combined with hydrogen or the combined tail gas and hydrogen gas is further treated for removal of NOₓ, CO, CO₂ and O₂ and compressed for synthesizing ammonia. At least part of the compression is performed prior to the further treatment of the nitric acid tail gas being combined with hydrogen, or prior to the treatment of the combined tail gas and hydrogen gas.

## Description

### Field of the invention

The present disclosure relates to the field of integrated nitric acid and ammonia production.

### Background

The integration of the production of nitric acid and of the production of ammonia can present various benefits.

If the production of nitric acid can be made more energy efficient such as to export additional steam from the conventional steam turbine, or as to generate more power from the tail gas expansion through the conventional tail gas expander, the integration of the nitric acid process in the ammonia production process can then allow for supplying, for example, electricity to an electrolyser producing hydrogen for ammonia production, or for supplying heat to natural gas to be converted to carbon monoxide and hydrogen for ammonia production.

In particular, the integration of the production of nitric acid and of the production of ammonia can be further beneficial if, instead being vented to the atmosphere, the tail gas generated from nitric acid production, as it contains about 85.0% to 99.5% nitrogen, is utilized in the production of ammonia. It has indeed been recognised that the nitric acid tail gas can be used as a precursor to a synthesis gas for ammonia synthesis.

WO2018054565 (Casale, 2017) discloses an integrated process for the synthesis of ammonia and nitric acid, comprising a synthesis of nitric acid including the following steps: a) subjecting a stream of ammonia to catalytic oxidation, obtaining a gaseous stream containing nitrogen oxides; b) subjecting said gaseous stream to a process of absorption of nitrogen oxides, providing nitric acid and a tail gas containing nitrogen and residual nitrogen oxides; c) subjecting at least a portion of said first tail gas to a process of removal of nitrogen oxides, providing a nitrogen oxides-depleted tail gas, and comprising a synthesis of ammonia by catalytic conversion of a make-up gas comprising hydrogen and nitrogen in an ammonia synthesis loop, wherein at least a portion of said second tail gas is used as nitrogen source for obtaining said make-up gas.

GB1597070A (Humphreys and Glasgow Ltd, 1978) discloses a process for the production of an ammonia synthesis gas which comprises providing a stream of hydrogen gas, obtaining a nitrogen gas-containing effluent gas stream from a process for the production of nitric acid from ammonia by the oxidation thereof with atmospheric air, and reacting a portion of the hydrogen in the hydrogen stream with the effluent gas to remove oxygen therefrom and to leave a mixture of hydrogen and nitrogen suitable for use in an ammonia-forming reaction.

WO2005082779A2 (Uhde Gmbh) discloses a method for reducing the emission of oxides of nitrogen during the production of nitric acid and a plant suitable for carrying out said method. The method comprises the following steps: i) producing ammonia by catalytic reaction of nitrogen with hydrogen in an ammonia plant, ii) introducing the ammonia so produced into an nitric acid plant, iii) combusting the ammonia to oxides of the nitrogen in the nitric acid plant, iv) washing the gas containing the oxides of the nitrogen with water in at least one absorption column disposed downstream of the ammonia combustion, thereby producing nitric acid, and v) returning to the ammonia plant at least a part of the residual gas leaving the nitric acid plant and containing oxides of the nitrogen.

GB2536996A (Johnson Matthey PLC, 2016) discloses the production of ammonium nitrate (NH₄NO₃) from ammonia and nitric acid (HNOs) comprising the steps of: a) providing a reaction gas mixture comprising hydrogen and nitrogen; b) passing the reaction gas mixture over a catalyst to form ammonia; c) catalytically oxidising a first portion of the ammonia to form a gas mixture comprising nitrogen, oxygen and nitric oxide (NO); and d) converting the NO into HNO₃, thereby forming a vent gas mixture comprising nitrogen, oxygen and nitrogen oxides (NOx), wherein the process comprises treating the vent gas mixture to produce a nitrogen gas stream and using at least a portion of the nitrogen gas stream (e.g. having less than 10 ppm oxygen) in the reaction gas mixture, and reacting a second portion of the ammonia recovered in step (b) with a portion of the nitric acid recovered in step (d) to form NH₄NO₃. The hydrogen may be generated by steam reforming of hydrocarbons to produce syngas, followed by water-gas shift (WGS) stage, carbon dioxide removal and methanation stage. The vent gas treatment of NOx may comprise reducing it with ammonia from the ammonia production unit to form nitrogen.

WO2019214921A1 (Casale, 2019) discloses an integrated process for the synthesis of ammonia and nitric acid including: production of an ammonia make-up synthesis gas, comprising steam reforming of a hydrocarbon feedstock under provision of steam reforming heat; catalytic conversion of said make-up synthesis gas into ammonia; catalytic oxidation of a stream of ammonia obtaining a process gas; absorption of said process gas with water obtaining nitric acid, wherein at least a portion of the steam reforming heat is recovered from said hot process gas.

Therefore, it can be concluded that the prior art discloses integrated systems for the recirculation of the nitric acid tail gas to ammonia production. The prior art further discloses the utilization of heat from the nitric acid process in grey ammonia production, that is involving reforming of a hydrocarbon feedstock. However, there remains a need to optimize the energy requirements associated with the recirculation of the nitric acid tail gas in ammonia production.

### Summary

In one aspect of the disclosure, a system for combined nitric acid and ammonia production is disclosed. The system comprises:
- a nitric acid plant for producing nitric acid comprising:
   ∘ an absorption tower for absorbing NOx gases, thereby generating nitric acid and a tail gas comprising nitrogen, NOx and O₂ gases;
   ∘ a tail gas expander configured for expanding a first part of the tail gas, thereby recovering energy from the first part of the tail gas;
   ∘ a first treatment unit located upstream of the tail gas expander for treating at least the first part of the tail gas for removing NOx from at least the first part of the tail gas, such that the first part of the tail gas provided to the tail gas expander comprises 100 ppm by volume or less NOₓ;
   ∘ means for heating upstream of the first treatment unit, for heating at least the first part of the tail gas; and
- an ammonia production plant for producing ammonia and comprising:
   ∘ a water electrolyzer for generating a hydrogen gas and an oxygen gas;
   ∘ a means for mixing at least a first part of the hydrogen gas and a second part of the tail gas, thereby generating a synthesis gas;
   ∘ a first compression system configured for compressing the synthesis gas, said compression system comprising one or several compression units and generating a compressed synthesis gas;
   ∘ a second treatment unit for removing NOₓ, CO, CO₂ and O₂ from the second part of the tail gas or from the synthesis gas, located upstream of the means for mixing, for generating a second part of the tail gas comprising less than 10 ppm by volume of atomic oxygen in total as NOₓ, CO, CO₂ and O₂, or located downstream of the means for mixing for generating a synthesis gas comprising less than 10 ppm by volume of atomic oxygen in total as NOₓ, CO, CO₂ and O₂; and
   ∘ an ammonia synthesis unit for reacting the compressed synthesis gas, thereby generating ammonia.

The system is characterised in that at least one compression unit of the first compression system is located upstream the second treatment unit.

The inventor has found that by placing at least one compression unit upstream the second treatment unit, the heat provided by the gas leaving this compression unit upstream the second treatment unit can be utilised in operating the second treatment unit, which means that the energy requirement for operating the second treatment unit is reduced.

Therefore, the system of the disclosure allows for the optimization of the energy requirements associated with the recirculation of the nitric acid tail gas in ammonia production.

In one embodiment according to the system of the disclosure, the system further comprises an air separation unit configured to provide nitrogen to the synthesis gas.

In one embodiment according to the system of the disclosure, in the means for mixing, the first part of the hydrogen gas is mixed with the second part of the tail gas, and the system further comprises a second compression system configured for compressing a second part of the hydrogen gas; or, in the means for mixing, all the hydrogen gas generated by the water electrolyzer is mixed with the second part of the tail gas.

In one embodiment according to the system of the disclosure, the first compression system further comprises at least one compression unit downstream of the second treatment unit and:
- the system further comprises a first cooling unit between the second treatment unit and the at least one compression unit downstream of the second treatment unit, the first cooling unit is configured to exchange heat between the synthesis gas and a coolant, thereby obtaining a first heated coolant, and the first cooling unit is further configured to provide the first heated coolant to the second treatment unit; and/or
- the system comprises a second cooling unit downstream the at least one compression unit downstream of the second treatment unit, the second cooling unit is configured to exchange heat between the synthesis gas and a coolant, thereby obtaining a second heated heated coolant, and the second cooling unit is further configured to provide the second heated coolant to the second treatment unit.

In one embodiment according to the system of the disclosure, the means for mixing is in direct fluid communication with the tail gas upstream the means for heating, and/or with the tail gas downstream the means for heating and upstream the first treatment unit, and/or with the tail gas downstream the first treatment unit.

In one embodiment according to the system of the disclosure, the system further comprises a hydrogen production unit comprises:
- a steam reforming unit for converting a hydrocarbon into carbon monoxide and hydrogen gas;
- a shift conversion unit for converting the carbon monoxide and hydrogen provided by the steam reforming unit into carbon dioxide and hydrogen gas; and
- a carbon dioxide removal unit for removing carbon dioxide from the carbon dioxide and hydrogen gas provided by the shift conversion unit;
and the hydrogen production unit is configured to provide hydrogen to the synthesis gas.

In one embodiment according to the system of the disclosure, the first and/or the second treatment unit is either a non-selective catalytic reduction unit or a selective catalytic reduction unit combined with a dedicated de-oxygenation unit, and, in particular, the selective catalytic reduction unit is supplied with the ammonia generated by the ammonia synthesis unit, or the non-selective catalytic reduction unit is supplied with the hydrogen gas generated by the water electrolyzer or by the carbon dioxide removal unit, with the ammonia generated by the ammonia synthesis unit, or with a hydrocarbon.

In one aspect of the disclosure, a method for the combined production of nitric acid and ammonia, performed in a system according to the system of the disclosure, is disclosed. The method comprises the steps of:
- producing the tail gas in the nitric acid plant;
- mixing the hydrogen gas and the second part of the tail gas, thereby generating a synthesis gas;
- treating the second part of the tail gas or the synthesis gas in the second treatment unit;
- compressing the synthesis gas in the first compression system wherein at least one compression unit of the first compression system is located upstream the second treatment unit, thereby generating the compressed synthesis gas; and
- reacting the compressed synthesis gas in the ammonia synthesis unit, thereby generating ammonia.

The method is characterized in that part of the step of compressing the synthesis gas is performed in the at least one compression unit upstream of the second treatment unit.

In one embodiment according to the method of the disclosure, the method further comprises the step of providing nitrogen to the synthesis gas, and the nitrogen is produced by an air separation unit.

In one embodiment according to the method of the disclosure, only part of the hydrogen gas is mixed with the second part of the tail gas in the mixing step, and the remaining part of the hydrogen gas is separately compressed in the second compression system; or all the hydrogen gas produced by the water electrolyzer is mixed with the second part of the tail gas in the mixing step.

In one embodiment according to the method of the disclosure, the method further comprises the steps of:
- exchanging heat between the synthesis gas and a coolant in the first cooling unit, thereby obtaining the first heated coolant and providing heat from the first heated coolant to the second treatment unit; and/or
- exchanging heat between the synthesis gas and a coolant in the second cooling unit, thereby obtaining the second heated coolant and providing heat from the second heated coolant to the second treatment unit.

In one embodiment according to the method of the disclosure, the second part of the tail gas mixed in the mixing step with the hydrogen gas is part of the tail gas upstream the means for heating, and/or is part of the tail gas downstream the means for heating and upstream the first treatment unit, and/or is part of the tail gas downstream the first treatment unit.

In one embodiment according to the method of the disclosure, the method further comprises the steps of:
- producing hydrogen from a hydrocarbon through steam reforming in the hydrogen production unit through the steps of:
   ∘ reforming the hydrocarbon in the steam reforming unit into carbon monoxide and hydrogen gas;
   ∘ converting the carbon monoxide and hydrogen provided by the steam reforming unit into carbon dioxide and hydrogen gas in the shift conversion unit; and
   ∘ removing carbon dioxide from the carbon dioxide and hydrogen gas provided by the shift conversion unit in the carbon dioxide removal unit; and
- providing the hydrogen to the synthesis gas.

In one embodiment according to the method of the disclosure, the treatment of the first and/or the second part of the tail gas is performed through combined selective catalytic reduction and de-oxygenation in the selective catalytic reduction unit combined with a de-oxygenation unit, or through non-selective catalytic reduction in the non-selective catalytic reduction unit, and, in particular, the selective catalytic reduction is performed using the ammonia generated by the ammonia synthesis unit, or the non-selective catalytic reduction is performed using the hydrogen gas generated by the water electrolyzer or by the hydrogen production unit, or using the ammonia generated by the ammonia synthesis unit, or using a hydrocarbon.

In one aspect of the disclosure, a method for revamping an ammonia production plant comprising:
∘ a water electrolyzer for generating a hydrogen gas and an oxygen gas;
∘ a first compression system for compressing a synthesis gas comprising hydrogen gas and nitrogen gas, comprising several compression units, for generating a compressed synthesis gas; and
∘ an ammonia synthesis unit for reacting the compressed synthesis gas, thereby generating ammonia;
is disclosed. The method comprises the steps of:
∘ introducing a means for mixing the hydrogen gas and a second part of a tail gas generated in a nitric acid production plant, thereby generating a synthesis gas, the nitric acid production plant comprising:
   ▪ an absorption tower for absorbing NOx gases, thereby generating nitric acid and a tail gas comprising nitrogen, NOx and O₂ gases;
   ▪ a tail gas expander for expanding at least a first part of the tail gas, thereby recovering energy from the tail gas;
   ▪ a first treatment unit upstream of the tail gas expander, for treating at least the first part of the tail gas, for removing NOx from the first part of the tail gas, such that the at least first part of the tail gas provided to the tail gas expander comprises 100 ppm by volume or less NOₓ; and
   ▪ means for heating upstream of the first treatment unit, for heating at least the first part of the tail gas;
   and
∘ introducing a second treatment unit for removing NOₓ, CO, CO₂ and O₂ from the second part of the tail gas or from the synthesis gas, upstream or downstream of the means for mixing, for respectively generating a second part of the tail gas comprising less than 10 ppm of atomic oxygen or a synthesis gas comprising less than 10 ppm of atomic oxygen.

The method is characterised in that the second treatment unit is introduced downstream of at least one of the several compression units.

### Description of the Figures

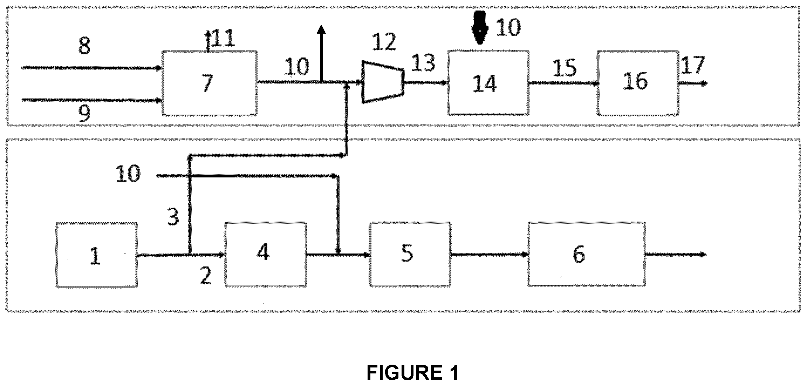

**Figure 1** shows one embodiment of the system according to the present disclosure.

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging between ... to ..." or "range from ... to ..." or "up to" as used when referring to a range for a measurable value, such as a parameter, an amount, a time period, and the like, is intended to include the limits associated to the range that is disclosed.

In one aspect of the disclosure, a system for combined nitric acid and ammonia production is disclosed. The system comprises a nitric acid plant for producing nitric acid comprising an absorption tower for absorbing NOx gases, thereby generating nitric acid and a tail gas comprising nitrogen, NOx and O₂ gases, a tail gas expander configured for expanding a first part of the tail gas, thereby recovering energy from the first part of the tail gas, a first treatment unit located upstream of the tail gas expander for treating at least the first part of the tail gas for removing NOx from at least the first part of the tail gas, such that the first part of the tail gas provided to the tail gas expander comprises 100 ppm by volume or less NOₓ, and means for heating upstream of the first treatment unit, for heating at least the first part of the tail gas; and an ammonia production plant for producing ammonia and comprising a water electrolyzer for generating a hydrogen gas and an oxygen gas; a means for mixing at least a first part of the hydrogen gas and a second part of the tail gas, thereby generating a synthesis gas; a first compression system configured for compressing the synthesis gas, said compression system comprising one or several compression units and generating a compressed synthesis gas; a second treatment unit for removing NOₓ, CO, CO₂ and O₂ from the second part of the tail gas or from the synthesis gas, located upstream of the means for mixing, for generating a second part of the tail gas comprising less than 10 ppm by volume of atomic oxygen in total as NOₓ, CO, CO₂ and O₂, or located downstream of the means for mixing for generating a synthesis gas comprising less than 10 ppm by volume of atomic oxygen in total as NOₓ, CO, CO₂ and O₂; and an ammonia synthesis unit for reacting the compressed synthesis gas, thereby generating ammonia.

The system is characterised in that at least one compression unit of the first compression system is located upstream the second treatment unit.

The person skilled in the art will recognize that the depletion in NOₓ by the first treatment unit and the depletion in NOₓ, N₂O, CO, CO₂ and O₂ by the second treatment unit are necessary in order to prevent the oxidation of the catalyst, catalysing the formation of ammonia from the compressed synthesis gas.

As defined herein, means for heating are any means for heating the first part of the tail gas to be expanded. In particular, the first part of the tail gas is heated through a heat exchanger, through transfer of the heat of a heating fluid that is cooled upon heating the first part of the tail gas.

In particular, the compressors are powered by electrical power. In particular, the compression units are powered by turbines ran with high quality steam, that is above 99% or more pure steam, which prevents scaling, decreases the need for maintenance and increases the lifetime of the turbines and the compression units.

The inventor has found that by placing at least one compression unit upstream the second treatment unit, the heat provided to the gas leaving this compression unit upstream the second treatment unit can be utilised in operating the second treatment unit, which means that the energy requirement for operating the second treatment unit is reduced.

Therefore, the system of the disclosure allows for the optimization of the energy requirements associated with the recirculation of the nitric acid tail gas in ammonia production.

Along with the second treatment unit, it is possible to have a methanator either upstream of the second treatment unit or downstream of the second treatment unit. The methanator can convert remaining CO and CO₂ into methane to further reduce the quantity of atomic oxygen to enter the ammonia synthesis unit. In case the methanator is located upstream of the second treatment unit, the heat generated by the treatment in the methanator and provided by the gas product at the outlet of the methanator can be utilised in the treatment in the second treatment unit. In case the methanator is located downstream of the second treatment unit, the heat generated by the treatment in the methanator and provided by the gas product at the outlet of the methanator can be recovered, for example through a heat exchange system, and supplied to the second treatment.

In particular, the system of the disclosure allows for part of the nitric acid tail gas to be recirculated within the nitric acid plant. This is achieved by fluidly connecting the nitric acid tail gas with an oxygen containing gas such as to achieve a nitric acid tail gas containing gas that has an oxygen content which allows its feeding to the ammonia oxidation burner and/or to the nitric acid absorption tower, such that the conversion of ammonia into nitric oxide and the absorption of NOx gases to provide nitric acid can proceed at the desired efficiency. Hence the tail gas, downstream the fluid connection with the oxygen containing gas can is fluidly connected to the ammonia oxidation burner and/or to the nitric acid absorption tower.

Through this latter fluid connection to the ammonia oxidation burner and/or to the nitric acid absorption tower, the power on the air compressor is reduced and the emissions to the air are lowered.

In one embodiment according to the system of the disclosure, the system further comprises an air separation unit configured to provide nitrogen to the synthesis gas.

The system of the disclosure allows for the incorporation of an air separation unit. In this manner, the production of ammonia does not need to be synchronised with the nitric acid production. This means that the production of ammonia does not depend on the production of the tail gas by the nitric acid production plant. In the event that the nitric acid production is disrupted, for example because an emergency stop or maintenance is required within the nitric acid production plant, with the supply of nitrogen gas from the air separation unit, the ammonia production plant can still be operated and ammonia can still be produced. The supply of nitrogen from the air separation unit can be either directly supplied to the ammonia production or can be liquefied for subsequent storage as liquid nitrogen that constitutes a supply of nitrogen can be supplied when needed for ammonia production.

In one embodiment according to the system of the disclosure, in the means for mixing, the first part of the hydrogen gas is mixed with the second part of the tail gas, and the system further comprises a second compression system configured for compressing a second part of the hydrogen gas; or, in the means for mixing, all the hydrogen gas generated by the water electrolyzer is mixed with the second part of the tail gas.

Therefore, the system of the disclosure is flexible such as to allow control on the amount of the hydrogen gas that is treated along with the second part of the tail gas in the second treatment unit. This means that the system can be controlled depending upon the residual CO, CO₂ and O₂ gases in the hydrogen gas. Indeed, if such residual amounts require full treatment of the hydrogen gas through the second treatment, it can be fully treated along with the second part of the tail gas. In the absence of a second compression system, the revamping of a state-of-the-art ammonia plant is simplified as the existing compression units can be used to perform the function of the compression units in the first compression system of the system of the disclosure and no additional compression unit to form a second compression system has to be added.

However, if it is not required to perform full treatment of the hydrogen gas in the second treatment unit, such as to achieve a synthesis gas suitable for being processed in the ammonia synthesis unit, then only part of the hydrogen gas can be treated in the second treatment unit.

Further, through the presence of the second compression system, the pressure of the combined hydrogen gas-second part of the tail gas can be better controlled prior to the final compression of the combined gas such that is suitable for conversion in the ammonia synthesis unit. This means that, overall, the pressure of the synthesis gas entering the ammonia synthesis unit is better controlled, resulting in turn in control of the actual ammonia synthesis in the ammonia synthesis unit.

In one embodiment according to the system of the disclosure, the first compression system further comprises at least one compression unit downstream of the second treatment unit. In addition, the system further comprises a first cooling unit between the second treatment unit and the at least one compression unit downstream of the second treatment unit, the first cooling unit is configured to exchange heat between the synthesis gas and a coolant, thereby obtaining a first heated coolant, and the first cooling unit is further configured to provide the first heated coolant to the second treatment unit; and/or the system comprises a second cooling unit downstream the at least one compression unit downstream of the second treatment unit, the second cooling unit is configured to exchange heat between the synthesis gas and a coolant, thereby obtaining a second heated coolant, and the second cooling unit is further configured to provide the second heated coolant to the second treatment unit.

With the presence of the first cooling unit, the gas that has to be compressed in the remaining compression unit is colder, which means that less power is required to operate the compression unit. Further, the first heated coolant can supply heat to the second treatment unit which means that the heat in the process is properly used for the operation of the second treatment unit to which, consequently, less heat has to be supplied. With the presence of the second cooling unit, the gas that has to be compressed in any remaining compression unit is colder, which means that less power is required to operate the remaining compression unit. Further, the second heated coolant can supply heat to the second treatment unit which means that the heat in the process is properly used for the operation of the second treatment unit to which, consequently, less heat has to be supplied.

In one embodiment according to the system of the disclosure, the means for mixing is in direct fluid communication with the tail gas upstream the means for heating, and/or with the tail gas downstream the means for heating and upstream the first treatment unit, and/or with the tail gas downstream the first treatment unit.

The system is, hence, flexible such as to allow the control over the temperature and chemical content in atomic oxygen of the second part of the tail gas. Therefore, the system allows the control of the chemical content in atomic oxygen of the second part of the tail gas, hence allowing the control on the required treatment in the second treatment unit. Further, the system allows for the control of the temperature of the second part of the tail gas, thereby allowing the control of the treatment in the second treatment unit and also on the power required to operate the remaining compression units of the first compression system.

In one embodiment according to the system of the disclosure, the system further comprises a hydrogen production unit comprises a steam reforming unit for converting a hydrocarbon into carbon monoxide and hydrogen gas, a shift conversion unit for converting the carbon monoxide and hydrogen provided by the steam reforming unit into carbon dioxide and hydrogen gas, and a carbon dioxide removal unit for removing carbon dioxide from the carbon dioxide and hydrogen gas provided by the shift conversion unit; and the hydrogen production unit is configured to provide hydrogen to the synthesis gas.

As defined herein, a steam reforming unit is a conventional steam reforming unit (SMR) comprising a primary reforming unit and a secondary reforming unit located downstream the primary reforming unit, or a conventional autothermal reforming unit (ATR) fed by oxygen-enriched air, that is air with above 21% oxygen gas, or pure oxygen gas, the ATR unit being located downstream a conventional fire heater.

The system of the disclosure is flexible such that not all of the hydrogen gas being mixed with the second part of the tail gas has to be produced through a water electrolyser and it can be produced through a conventional SMR or ATR ammonia production plant, involving the treatment of a hydrocarbon with steam and oxygen.

As the transition towards the production of hydrogen solely through the use of a water electrolyser is going to require time, during this transition hydrogen will be produced by a mixture of water electrolysis and SMR or ATR. This means that the hydrogen production system will be a hybrid system comprising a water electrolyser and an SMR or an ATR and it is important that the system of the disclosure is operable with hydrogen gas being produced by such a hybrid system.

In one embodiment according to the system of the disclosure, the first and/or the second treatment unit is either a non-selective catalytic reduction unit or a selective catalytic reduction unit combined with a dedicated de-oxygenation unit, and, in particular, the selective catalytic reduction unit is supplied with the ammonia generated by the ammonia synthesis unit, or the non-selective catalytic reduction unit is supplied with the hydrogen gas generated by the water electrolyzer or by the carbon dioxide removal unit, with the ammonia generated by the ammonia synthesis unit, or with a hydrocarbon.

The system of the disclosure allows for both the first and the second treatment unit to be either a non-selective catalytic reduction unit (SNCR), a selective catalytic reduction unit (SCR) combined with a de-oxygenation unit, or a combination thereof.

Therefore, the system allows to advantageously make use of both the benefits of a non-selective catalytic reduction unit including ease of installation, lower capital and operating costs compared with SCR, lower costs associated with the replacement of catalysts and easy retrofitting of components in the large-scale boiler units, resulting in little downtime, and the benefits of an SCR including suitability for NOₓ reduction up to 90%.

In the case of the use of an SCR unit, the de-oxygenation unit is located downstream the SCR unit and has to reduce the content of oxygen gas to reach a content of atomic oxygen of 10 ppm or less. It is not necessary to remove the oxygen in the form of water provided that the amount of water coming out of the SCR. That is because water can be very easily removed during the compression stage, in order to cool the gas stream to be compressed, through the introduction of liquid ammonia into the stream which absorbs it with a very strong affinity.

An advantage of the system of the disclosure is that, considering that the system provides a hydrogen gas and an ammonia gas, there is a source of a clean fuel, that is a fuel the use of which results in reduced green-house gas emissions generated by the combustion of the fuel.

In the event of a hybrid plant utilising a hydrocarbon gas in an SMR or ATR treatment, an advantage is that a source of fuel, such as an hydrocarbon, is already part of the system and, hence, no additional source of fuel is required to supply the second treatment unit. Such advantage is also present when hydrogen or ammonia is supplied as fuel to the second treatment unit since, as mentioned above, hydrogen gas and ammonia gas are also part of the system.

In one aspect of the disclosure, a method for combined nitric acid and ammonia production, performed in a system according to the system of any one of claims 1 to 9, is disclosed. The method comprises the steps of producing the tail gas in the nitric acid plant; operating the water electrolyzer of the ammonia production plant, thereby generating the hydrogen gas; mixing the hydrogen gas and the second part of the tail gas; treating the second part of the tail gas or the mixed hydrogen gas and second part of the tail gas in the second treatment unit; compressing the hydrogen gas and the second part of the tail gas in the first compression system, thereby generating the compressed synthesis gas; and reacting the compressed synthesis gas in the ammonia synthesis unit, thereby generating ammonia.

The method is characterized in that part of the compressing step is performed before the treating step.

The inventor has found that by performing part of the compression step before the treating step, heat is provided by the gas leaving this compression unit upstream the second treatment unit and can be utilised in operating the second treatment unit, which means that the energy requirement for the operation the second treatment unit is reduced.

Therefore, the method of the disclosure allows for the optimization of the energy requirements associated with the recirculation of the nitric acid tail gas in ammonia production.

Along with the second treatment unit, it is possible to have a methanator either upstream of the second treatment unit or downstream of the second treatment unit. The methanator can convert remaining CO and CO₂ into methane to further reduce the quantity of atomic oxygen to enter the ammonia synthesis unit. In case the methanator is located upstream of the second treatment unit, the heat generated by the treatment in the methanator and provided by the gas product at the outlet of the methanator can be utilised in the treatment in the second treatment unit. In case the methanator is located downstream of the second treatment unit, the heat generated by the treatment in the methanator and provided by the gas product at the outlet of the methanator can be recovered, for example through a heat exchange system, and supplied to the second treatment.

In particular, the nitric acid tail gas is also recirculated within the nitric acid plant. This is achieved by mixing part of the nitric acid tail gas with an oxygen containing gas such as to achieve a nitric acid tail gas containing gas that has a sufficient oxygen content to be fed to the ammonia oxidation burner and/or to the nitric acid absorption tower, such that the conversion of ammonia into nitric oxide and the absorption of NOx gases to provide nitric acid can proceed at the desired efficiency.

By feeding the nitric acid tail gas and oxygen to the ammonia oxidation burner or to the nitric acid absorption tower, the power on the air compressor is reduced and the emissions to the air are lowered.

In one embodiment according to the method of the disclosure, the method further comprises the step of providing nitrogen to the synthesis gas, and the nitrogen is produced by an air separation unit.

The method of the disclosure allows for the use of nitrogen gas provided by an air separation unit. In this manner, the production of ammonia does not need to be synchronised with the nitric acid production. This means that the production of ammonia does not depend on the production of the tail gas by the nitric acid production plant. In the event that the nitric acid production is disrupted, for example because an emergency stop or maintenance is required within the nitric acid production plant, with the operation of the air separation unit, nitrogen gas is still supplied and the ammonia production plant can still be operated and ammonia can still be produced.

In one embodiment according to the method of the disclosure, only part of the hydrogen gas is mixed with the second part of the tail gas in the mixing step, and the remaining part of the hydrogen gas is separately compressed in the second compression system; or all the hydrogen gas produced by the water electrolyzer is mixed with the second part of the tail gas in the mixing step.

Therefore, the method of the disclosure is flexible such as to allow control on the amount of the hydrogen gas that is treated along with the second part of the tail gas in the second treatment unit. This means that the system can be controlled depending upon the residual CO, CO₂ and O₂ gases in the hydrogen gas. Indeed, if such residual amounts require full treatment of the hydrogen gas through the second treatment, it can be fully treated along with the second part of the tail gas. In the absence of an additional compression of the hydrogen gas not being directly mixed with the second part of the tail gas, the operation of the system is simplified.

However, if it is not required to perform full treatment of the hydrogen gas in the second treatment unit, such as to achieve a synthesis gas suitable for being processed in the ammonia synthesis unit, then only part of the hydrogen gas can be treated in the second treatment unit.

Further, through the compression of the hydrogen gas not being directly mixed with the second part of the tail gas, the pressure of the combined hydrogen gas-second part of the tail gas can be better controlled prior to the final compression of the combined gas such that is suitable for conversion in the ammonia synthesis unit. This means that, overall, the pressure of the synthesis gas entering the ammonia synthesis unit is better controlled, resulting in turn in control of the actual ammonia synthesis in the ammonia synthesis unit.

In one embodiment according to the method of the disclosure, the method further comprises the steps of exchanging heat between the synthesis gas and a coolant in the first cooling unit, thereby obtaining the first heated coolant and providing heat from the first heated coolant to the second treatment unit and/or exchanging heat between the synthesis gas and a coolant in the second cooling unit, thereby obtaining the second heated coolant and providing heat from the second heated coolant to the second treatment unit.

With the presence of the first cooling unit, the gas that has to be compressed in the remaining compression unit is colder, which means that less power is required to operate the compression unit. Further, the first heated coolant can supply heat to the second treatment unit which means that the heat in the process is properly used for the operation of the second treatment unit to which, consequently, less heat has to be supplied. With the presence of the second cooling unit, the gas that has to be compressed in any remaining compression unit is colder, which means that less power is required to operate the remaining compression unit. Further, the second heated coolant can supply heat to the second treatment unit which means that the heat in the process is properly used for the operation of the second treatment unit to which, consequently, less heat has to be supplied.

In particular, the synthesis gas is cooled to a temperature of 50 °C or less. More in particular, the synthesis gas is cooled to a temperature ranging from 10 to 50 °C.

In one embodiment according to the method of the disclosure, the second part of the tail gas mixed in the mixing step with the hydrogen gas is part of the tail gas upstream the means for heating, and/or is part of the tail gas downstream the means for heating and upstream the first treatment unit, and/or is part of the tail gas downstream the first treatment unit.

The method is, hence, flexible such as to allow the control over the temperature and chemical content in atomic oxygen of the second part of the tail gas. Therefore, the method allows the control of the chemical content in atomic oxygen of the second part of the tail gas, hence allowing the control on the required treatment in the second treatment unit. Further, the method allows for the control of the temperature of the second part of the tail gas, thereby allowing the control of the treatment in the second treatment unit and also on the power required to operate the remaining compression units of the first compression system.

In one embodiment according to the method of the disclosure, the method further comprises the steps of producing hydrogen from a hydrocarbon through steam reforming in the hydrogen production unit through the steps of reforming the hydrocarbon in the steam reforming unit into carbon monoxide and hydrogen gas, converting the carbon monoxide and hydrogen provided by the steam reforming unit into carbon dioxide and hydrogen gas in the shift conversion unit, and removing carbon dioxide from the carbon dioxide and hydrogen gas provided by the shift conversion unit in the carbon dioxide removal unit; and providing the hydrogen to the synthesis gas.

As defined herein, a steam reforming unit is a conventional steam reforming unit (SMR) comprising a primary reforming unit and a secondary reforming unit located downstream the primary reforming unit, or a conventional autothermal reforming unit (ATR) fed by oxygen-enriched air, that is air with above 21% oxygen gas, or pure oxygen gas, the ATR unit being located downstream a conventional fire heater.

The system of the disclosure is flexible such that not all of the hydrogen gas being mixed with the second part of the tail gas has to be produced through a water electrolyser and it can be produced through a conventional SMR or ATR ammonia production plant, involving the treatment of a hydrocarbon with steam and oxygen.

As the transition towards the production of hydrogen solely through the use of a water electrolyser is going to require time, during this transition hydrogen will be produced by a mixture of water electrolysis and SMR or ATR. This means that the hydrogen production system will be a hybrid system comprising a water electrolyser and an SMR or an ATR and it is important that the system of the disclosure is operable with hydrogen gas being produced by such a hybrid system.

In one embodiment according to the method of the disclosure, the treatment of the first and/or the second part of the tail gas is performed through combined selective catalytic reduction and de-oxygenation in the selective catalytic reduction unit combined with a de-oxygenation unit, or through non-selective catalytic reduction in the non-selective catalytic reduction unit, and, in particular, the selective catalytic reduction is performed using the ammonia generated by the ammonia synthesis unit, or the non-selective catalytic reduction is performed using the hydrogen gas generated by the water electrolyzer or by the hydrogen production unit, or using the ammonia generated by the ammonia synthesis unit, or using a hydrocarbon.

In one embodiment according to the method of the disclosure, the treatment of the first and/or the second part of the tail gas is performed through combined selective catalytic reduction and de-oxygenation in the selective catalytic reduction unit combined with a de-oxygenation unit, or through non-selective catalytic reduction in the non-selective catalytic reduction unit, and, in particular, the selective catalytic reduction is performed using the ammonia generated by the ammonia synthesis unit, or the non-selective catalytic reduction is performed using the hydrogen gas generated by the water electrolyzer or by the hydrogen production unit, or using the ammonia generated by the ammonia synthesis unit, or using a hydrocarbon.

The method of the disclosure allows for both the first and the second part of the tail gas to be treated by either a non-selective catalytic reduction unit (SNCR), a selective catalytic reduction unit (SCR) combined with a de-oxygenation unit, or a combination thereof.

Therefore, the method allows to advantageously make use of both the benefits of a non-selective catalytic reduction unit including lower operating costs compared with SCR, lower costs associated with the replacement of catalysts and easy retrofitting of components in the large scale boiler units, resulting in little downtime, and the benefits of an SCR including NOₓ reduction up to 90%.

In the case of the use of an SCR treatment, the de-oxygenation treatment is performed downstream the SCR treating step and has to reduce the content of oxygen gas to reach a content of atomic oxygen of 10 ppm or less. That is because water can be very easily removed during the compression stage, in order to cool the gas stream to be compressed, through the introduction of liquid ammonia into the stream which absorbs it with a very strong affinity.

An advantage of the method of the disclosure is that, considering that the method provides a hydrogen gas and an ammonia gas, a source of a clean fuel, that is a fuel the use of which results in reduced green-house gas emissions generated by the combustion of the fuel, is produced.

In the event of a hybrid plant utilising a hydrocarbon gas in an SMR or ATR treatment, an advantage is that a source of fuel, such as a hydrocarbon, is already produced by the method and, hence, no additional source of fuel has to be produced to be supplied the second treatment unit. Such advantage is also present when hydrogen or ammonia is supplied as fuel to the second treatment unit since, as mentioned above, hydrogen gas and ammonia gas are also part of the method.

In one aspect of the disclosure, a method for revamping an ammonia production plant comprising a water electrolyzer for generating a hydrogen gas and an oxygen gas, a first compression system for compressing a synthesis gas comprising hydrogen gas and nitrogen gas, comprising several compression units, for generating a compressed synthesis gas, and an ammonia synthesis unit for reacting the compressed synthesis gas, thereby generating ammonia, is disclosed.

The method comprises the steps of introducing a means for mixing the hydrogen gas and a second part of a tail gas generated in a nitric acid production plant, thereby generating a synthesis gas, the nitric acid production plant comprising an absorption tower for absorbing NOx gases, thereby generating nitric acid and a tail gas comprising nitrogen, NOx and O₂ gases, a tail gas expander for expanding at least a first part of the tail gas, thereby recovering energy from the tail gas, a first treatment unit upstream of the tail gas expander, for treating at least the first part of the tail gas, for removing NOx from the first part of the tail gas, such that the at least first part of the tail gas provided to the tail gas expander comprises 100 ppm by volume or less NOₓ, and means for heating upstream of the first treatment unit, for heating at least the first part of the tail gas; and introducing a second treatment unit for removing NOₓ, CO, CO₂ and O₂ from the second part of the tail gas or from the synthesis gas, upstream or downstream of the means for mixing, for respectively generating a second part of the tail gas comprising less than 10 ppm of atomic oxygen or a synthesis gas comprising less than 10 ppm of atomic oxygen.

The method is characterised in that the second treatment unit is introduced downstream of at least one of the several compression units.

In one aspect of the disclosure, the use of the system of the disclosure for performing the method of the disclosure is disclosed.

### Example

Reference is made to Figure 1. Nitric acid was produced in a nitric acid production plant. The tail gas leaving the absorber 1 of the nitric acid production plant was split into a first tail gas stream 2 and a second tail gas stream 3 having identical chemical compositions. The first tail gas stream 2 was heated in a heating unit 4. The gas stream leaving the unit 4 was subsequently treated in a first non-selection catalytic reduction unit 5 such as to achieve a gas stream that contained less than 100 ppm NOₓ. This gas stream leaving the non-selective catalytic reduction unit was used for rotating a tail gas turbine 6 connected to a generator (not shown), which generated electricity, and the gas leaving the tail gas turbine was vented to the atmosphere. In a water electrolyser 7, from water 8 and electricity 9, hydrogen gas 10 and oxygen gas 11 were generated. The second tail gas stream 3 and the hydrogen gas 10 were mixed and compressed in a compressor 12 to generate a compressed synthesis gas 13 having a temperature of up to 300 °C. The compressed synthesis gas 13 was treated in a second non-selection catalytic reduction unit 14 at a temperature ranging from 450 to 650 °C, such as to generate a compressed and treated generated synthesis gas containing less than 10 ppm of atomic oxygen. Due to the temperature of the compressed synthesis gas 13, less heat had to be supplied to the second non-selection catalytic reduction unit 14. No further treatment for removing traces of water was performed. Remaining amounts of CO and CO₂ were converted into methane into a methanator (not shown). Next, the compressed and treated synthesis gas was converted into ammonia 17 in an ammonia synthesis unit 16 after further compression to 130 bar in a compressor (not shown) that comprised a liquid ammonia wash cooling system. As a fuel to the first and second non-selection catalytic reduction unit 5 and 14, respectively, part of the hydrogen gas leaving the electrolyser 7 and not mixed with the second tail gas stream 3 was utilised.

## Claims

1. A system for combined nitric acid and ammonia production comprising:
• a nitric acid plant for producing nitric acid comprising:
∘ an absorption tower for absorbing NOx gases, thereby generating nitric acid and a tail gas comprising nitrogen, NOx and O₂ gases;
∘ a tail gas expander configured for expanding a first part of the tail gas, thereby recovering energy from the first part of the tail gas;
∘ a first treatment unit located upstream of the tail gas expander for treating at least the first part of the tail gas for removing NOx from at least the first part of the tail gas, such that the first part of the tail gas provided to the tail gas expander comprises 100 ppm by volume or less NOₓ; and
∘ means for heating upstream of the first treatment unit, for heating at least the first part of the tail gas; and
• an ammonia production plant for producing ammonia and comprising:
∘ a water electrolyzer for generating a hydrogen gas and an oxygen gas;
∘ a means for mixing at least a first part of the hydrogen gas and a second part of the tail gas, thereby generating a synthesis gas;
∘ a first compression system configured for compressing the synthesis gas, said compression system comprising one or several compression units and generating a compressed synthesis gas;
∘ a second treatment unit for removing NOₓ, CO, CO₂ and O₂ from the second part of the tail gas or from the synthesis gas, located upstream of the means for mixing, for generating a second part of the tail gas comprising less than 10 ppm by volume of atomic oxygen in total as NOₓ, CO, CO₂ and O₂, or located downstream of the means for mixing for generating a synthesis gas comprising less than 10 ppm by volume of atomic oxygen in total as NOₓ, CO, CO₂ and O₂; and
∘ an ammonia synthesis unit for reacting the compressed synthesis gas, thereby generating ammonia;
wherein at least one compression unit of the first compression system is located upstream the second treatment unit.

2. The system according to claim 1, further comprising an air separation unit configured to provide nitrogen to the synthesis gas.

3. The system according to any one of claims 1 to 2, wherein, in the means for mixing, the first part of the hydrogen gas is mixed with the second part of the tail gas, and wherein the system further comprises a second compression system configured for compressing a second part of the hydrogen gas; or
wherein, in the means for mixing all the hydrogen gas generated by the water electrolyzer is mixed with the second part of the tail gas.

4. The system according to any one of claims 1 to 3, wherein the first compression system further comprises at least one compression unit downstream of the second treatment unit and:
• wherein the system further comprises a first cooling unit between the second treatment unit and the at least one compression unit downstream of the second treatment unit, wherein the first cooling unit is configured to exchange heat between the synthesis gas and a coolant, thereby obtaining a first heated coolant, and wherein the first cooling unit is further configured to provide the first heated coolant to the second treatment unit; and/or
• wherein the system comprises a second cooling unit downstream the at least one compression unit downstream of the second treatment unit, wherein the second cooling unit is configured to exchange heat between the synthesis gas and a coolant, thereby obtaining a second heated heated coolant, and wherein the second cooling unit is further configured to provide the second heated coolant to the second treatment unit.

5. The system according to any one of claims 1 to 4, wherein the means for mixing is in direct fluid communication with the tail gas upstream the means for heating, and/or with the tail gas downstream the means for heating and upstream the first treatment unit, and/or with the tail gas downstream the first treatment unit.

6. The system according to any one of claims 1 to 5, further comprising a hydrogen production unit comprising:
• a steam reforming unit for converting a hydrocarbon into carbon monoxide and hydrogen gas;
• a shift conversion unit for converting the carbon monoxide and hydrogen provided by the steam reforming unit into carbon dioxide and hydrogen gas; and
• a carbon dioxide removal unit for removing carbon dioxide from the carbon dioxide and hydrogen gas provided by the shift conversion unit;
wherein the hydrogen production unit is configured to provide hydrogen to the synthesis gas.

7. The system according to any one of claims 1 to 6, wherein the first and/or the second treatment unit is either a non-selective catalytic reduction unit or a selective catalytic reduction unit combined with a dedicated de-oxygenation unit, in particular wherein the selective catalytic reduction unit is supplied with the ammonia generated by the ammonia synthesis unit, or wherein the non-selective catalytic reduction unit is supplied with the hydrogen gas generated by the water electrolyzer or by the carbon dioxide removal unit, with the ammonia generated by the ammonia synthesis unit, or with a hydrocarbon.

8. A method for the combined production of nitric acid and ammonia, performed in a system according to the system of any one of claims 1 to 7, comprising the steps of:
• producing the tail gas in the nitric acid plant;
• mixing the hydrogen gas and the second part of the tail gas, thereby generating a synthesis gas;
• treating the second part of the tail gas or the synthesis gas in the second treatment unit;
• compressing the synthesis gas in the first compression system wherein at least one compression unit of the first compression system is located upstream the second treatment unit, thereby generating the compressed synthesis gas; and
• reacting the compressed synthesis gas in the ammonia synthesis unit, thereby generating ammonia;
**characterized in that** part of the step of compressing the synthesis gas is performed in the at least one compression unit upstream of the second treatment unit.

9. The method according to claim 8, further comprising the step of providing nitrogen to the synthesis gas, wherein the nitrogen is produced by an air separation unit.

10. The method according to claim 8 or 9, wherein only part of the hydrogen gas, produced by a water electrolyzer, is mixed with the second part of the tail gas in the mixing step, and wherein the remaining part of the hydrogen gas is separately compressed in the second compression system; or all the hydrogen gas produced by the water electrolyzer is mixed with the second part of the tail gas in the mixing step.

11. The method according to any one of claims 8 to 10, further comprising the steps of:
• exchanging heat between the synthesis gas and a coolant in the first cooling unit, thereby obtaining the first heated coolant and providing heat from the first heated coolant to the second treatment unit; and/or
• exchanging heat between the synthesis gas and a coolant in the second cooling unit, thereby obtaining the second heated coolant and providing heat from the second heated coolant to the second treatment unit.

12. The method according to any one of claims 8 to 11, wherein, the second part of the tail gas mixed in the mixing step with the hydrogen gas is part of the tail gas upstream the means for heating, and/or is part of the tail gas downstream the means for heating and upstream the first treatment unit, and/or is part of the tail gas downstream the first treatment unit.

13. The method according to any one of claims 8 to 12, further comprising the steps of:
• producing hydrogen from a hydrocarbon through steam reforming in the hydrogen production unit through the steps of:
∘ reforming the hydrocarbon in the steam reforming unit into carbon monoxide and hydrogen gas;
∘ converting the carbon monoxide and hydrogen provided by the steam reforming unit into carbon dioxide and hydrogen gas in the shift conversion unit; and
∘ removing carbon dioxide from the carbon dioxide and hydrogen gas provided by the shift conversion unit in the carbon dioxide removal unit; and
• providing the hydrogen to the synthesis gas.

14. The method according to any one of claims 8 to 13, wherein the treatment of the first and/or the second part of the tail gas is performed through combined selective catalytic reduction and de-oxygenation in the selective catalytic reduction unit combined with a de-oxygenation unit, or through non-selective catalytic reduction in the non-selective catalytic reduction unit, in particular wherein the selective catalytic reduction is performed using the ammonia generated by the ammonia synthesis unit, or wherein the non-selective catalytic reduction is performed using the hydrogen gas generated by the water electrolyzer or by the hydrogen production unit, or using the ammonia generated by the ammonia synthesis unit, or using a hydrocarbon.

15. A method for revamping an ammonia production plant comprising:
∘ a water electrolyzer for generating a hydrogen gas and an oxygen gas;
∘ a first compression system for compressing a synthesis gas comprising hydrogen gas and nitrogen gas, said compression system comprising several compression units, for generating a compressed synthesis gas; and
∘ an ammonia synthesis unit for reacting the compressed synthesis gas, thereby generating ammonia;
comprising the steps of:
∘ introducing a means for mixing the hydrogen gas and a second part of a tail gas generated in a nitric acid production plant, thereby generating a synthesis gas, the nitric acid production plant comprising:
▪ an absorption tower for absorbing NOx gases, thereby generating nitric acid and a tail gas comprising nitrogen, NOx and O₂ gases;
▪ a tail gas expander for expanding at least a first part of the tail gas, thereby recovering energy from the tail gas;
▪ a first treatment unit upstream of the tail gas expander, for treating at least the first part of the tail gas, for removing NOx from the first part of the tail gas, such that the at least first part of the tail gas provided to the tail gas expander comprises 100 ppm by volume or less NOₓ; and
▪ means for heating upstream of the first treatment unit, for heating at least the first part of the tail gas;
and
∘ introducing a second treatment unit for removing NOₓ, CO, CO₂ and O₂ from the second part of the tail gas or from the synthesis gas, upstream or downstream of the means for mixing, for respectively generating a second part of the tail gas comprising less than 10 ppm of atomic oxygen or a synthesis gas comprising less than 10 ppm of atomic oxygen;
**characterised in that** the second treatment unit is introduced downstream of at least one of the several compression units.
